# EUROPÄISCHE PATENTSCHRIFT

(11) **EP 0 836 019 B1**
(45) Veröffentlichungstag und Bekanntmachung des Hinweises auf die Patenterteilung: **08.01.2003**
(21) Anmeldenummer: 97117750.6
(22) Anmeldetag: 14.10.1997
(51) Int. Cl.: F16C 11/06

(54) **Kugelgelenkförmige Verbindung mit wirksamer Abschirmung gegenüber Einflüssen von aussen**
Ball joint with activ protection against influences from outside
Joint à rotule avec protection active contre toute influence de l'extérieur

(30) Priorität: 14.10.1996 DE 29617843 U
(43) Veröffentlichungstag der Anmeldung: 15.04.1998
(73) Patentinhaber: SPRINGFIX-Befestigungstechnik GmbH, D-73084 Salach (DE)
(72) Erfinder: Theil, Erich, 73344 Gruibingen (DE); Haidle, Peter, 73035 Göppingen-Bartenbach (DE); Ecker, Rainer, 73033 Göppingen (DE)
(74) Vertreter: Bardehle, Heinz, Dipl.-Ing.

(56) Entgegenhaltungen:
- EP-A- 0 344 822
- EP-A- 0 591 928
- WO-A-96/37710
- FR-A- 1 573 635
- FR-A- 2 417 672
- GB-A- 929 886

## Beschreibung

Die Erfindung betrifft eine kugelgelenkförmige Verbindung, wobei die Oberfläche eines kugelförmigen Schaftendes und der dazu entsprechenden kalottenförmigen Aufnahme wirkungsvoll gegenüber schädlichen Einflüssen von außen, wie Staub, Schmutz, chemischen Stoffen, Feuchtigkeit und Trockenheit, abgeschirmt wird. Insbesondere bezieht sich die Erfindung auf eine Kugelgelenkverbindung, wobei die Oberfläche der an einem Schaft oder Zapfen angeordneten Kugel und die Innengleitfläche der dazugehörigen Kalotte gegenüber den genannten Einflüssen von außen wirkungsvoll abgeschirmt wird.

Zum Stand der Technik gehören Kugelgelenkverbindungen mit einem ausreichenden zwei- oder dreidimensionalen Schwenkwinkelbereich, wobei bisher die Abschirmung des Gelenkbereiches gegenüber schädliche Einflüsse von außen durch an dem die Kugel tragenden Schaftbereich anliegende Einrichtungen, wie Schutzlippen, Manschetten und dergleichen, erfolgte. Bei der Benutzung solcher Kugelgelenkverbindungen wurde jedoch festgestellt, daß bei einer starken Auslenkung des Kugelzapfens sich die am Schaft anliegenden Abdichtungseinrichtungen wenigstens spaltbreit öffnen. Auf diese Weise können Staub, Schmutz, chemische Stoffe, Feuchtigkeit und Trockenheit in den Gleitbereich des Kugelgelenkes eindringen und dessen Gleitfähigkeit im Laufe der Zeit bleibend beeinträchtigen.

Die FR-A-2417672 offenbart eine Gelenkverbindung gemäß dem Oberbegriff des Anspruchs 1.

Der Erfindung liegt daher die Aufgabe zugrunde, eine langlebige kugelförmige Gelenkverbindung zu schaffen, mit der insbesondere die aufgezeigten, dem Stand der Technik anhaftenden Nachteile bezüglich der Dichtung beseitigt werden, bei gleichzeitiger einfacher Montierbarkeit.

Dieses Problem wird erfindungsgemäß durch die Merkmale des Anspruchs 1 gelöst.

Der Hohlraum bewirkt dass die Schutzlippe beim Einstecken der Kugel des Kugelzapfens bzw. -schaftes in die kugelpfanne problemlos überfahren werden kann, so daß keine Materialverdrängungsprobleme auftreten.

Die Kugelpfanne kann aus einem kalottenförmigen Einsatz bestehen, von der mindestens eine Schutzlippe ausgeht, die an dem zapfennahen Oberflächenbereich der Gelenkkugel anliegt. Das Material des kalottenförmigen Einsatzes kann aus einem flexiblen Kunststoffmaterial bestehen, das in seiner sphärischen Gleitoberfläche Vertiefungen zur Aufnahme von Schmierstoffen aufweist oder in dem bereits Schmierstoffe integriert sind.

Eine besondere Ausführungsform der Erfindung besteht darin, daß anstelle einer Kugelpfanne ein Aufnahmelager verwendet wird, das aus einem harten festen Kunststoff bestehen kann. Ein Außenrand des Aufnahmelagers ist als ringförmiger Vorsprung ausgebildet. Der aus flexiblem Kunststoff gefertigte kalottenförmige Einsatz weist eine entsprechende ringförmige Aussparung auf, in die der ringförmige Vorsprung des Aufnahmelagers paßt. Die andere Seite des kalottenförmigen Einsatzes ist als ringförmige gegen den zapfennahen Bereich der Gelenkkugel gerichteten Schutzlippe ausgestattet.

Beim Auslenken des Kugelzapfens gleitet die Schutzlippe auf dem vorbestimmten Schwenkbereich der Kugeloberfläche, beispielsweise α und dichtet dort wirkungsvoll das Gelenk gegenüber schädlichen Einflüssen von außen, wie Staub, Schmutz, chemischen Stoffen, Feuchtigkeit, Trockenheit und dergleichen, ab. Diese Kugelgelenkverbindung ist einfach herzustellen, zum Beispiel nach der Spritzgußtechnik, und schnell zu montieren. Die erfindungsgemäße Kugelgelenkverbindung ist vielseitig einsetzbar. Die Kugelpfanne oder das Aufnahmelager mit dem kugelkalottenförmigen Einsatz kann in einem Schaft eingesteckt und befestigt sowie ggf.drehbar gelagert sein, während der Kugelzapfen um einen vorbestimmten Schwenkwinkelbereich auslenkbar in dem kugelkalottenförmigen Einsatz gelagert ist.

Die Erfindung wird nachfolgend an Ausführungsbeispielen anhand der beigefügten Zeichnungen näher erläutert.

In den Zeichnungen zeigen:
- Fig. 1: eine Schnittansicht durch eine Kugelgelenkverbindung, bestehend aus einer Kugelpfanne mit integrierter Schutzlippe und eingesetztem Kugelzapfen bzw. -schaft,
- Fig. la: eine Schnittansicht gemäß Fig. 1, bei der die Schutzlippe 6 aus weicherem Material an der Kugelpfanne angebracht, z.B. angespritzt ist.
- Fig. 2: eine Schnittansicht durch eine Kugelgelenkverbindung, bestehend aus einer Kugelpfanne mit einem kugelkalottenförmigen Einsatz, an dem die Schutzlippe angeordnet ist, und
- Fig. 3: eine Schnittansicht durch eine Kugelgelenkverbindung bestehend aus einem Aufnahmelager mit einem kugelkalottenförmigen Einsatz, an dem die Schutzlippe angeordnet ist.

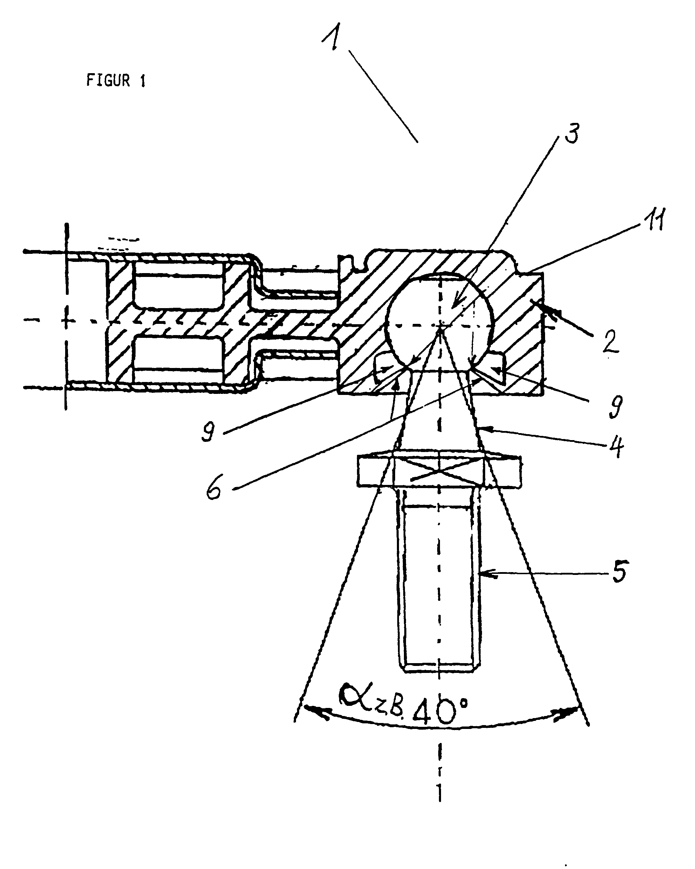

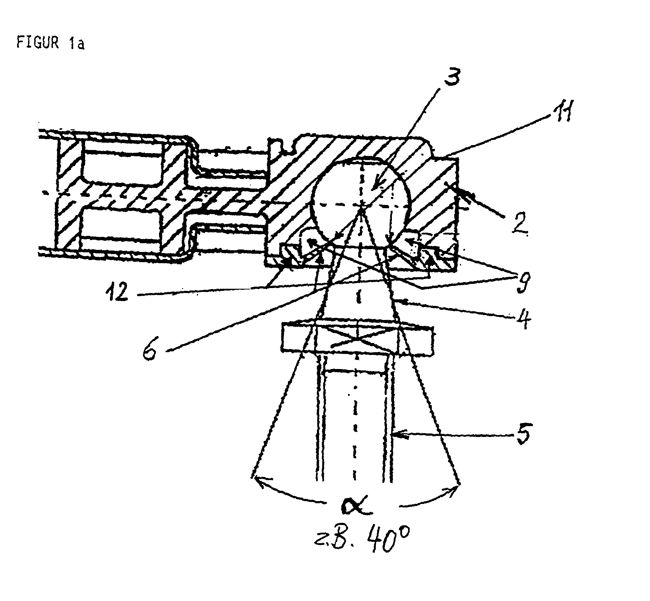

Figur 1 zeigt eine Kugelgelenkverbindung, die aus der Kugelpfanne 2 und der Gelenkkugel 3 bzw. dem Kugelkopf 3 besteht. Der Kugelkopf 3 ist über einen Zapfen 4 mit dem Schaft 5 verbunden. Von der Kugelpfanne 2 geht von der dem Zapfen 4 zugewandten Seite eine ringförmige im Querschnitt beispielsweise keilförmig auslaufende Schutzlippe 6 aus, die an der zapfennahen Oberfläche 7 des Kugelkopfes 3 dichtend anliegt. Damit die ringförmige Schutzlippe 6 beim Einführen des Kugelkopfes 3 in die Kugelpfanne 2 überfahren werden kann, ist dahinter ein hohler Ringraum 9 vorgesehen, so daß die Schutzlippe 6 dorthin vorübergehend ausweichen kann, so daß keine Probleme durch andernfalls notwendige Materialverdrängungen auftreten.

Das Material der Kugelpfanne 2 besteht aus einem ausreichend harten, festen und elastischen Kunststoff, so daß sich die Schutzlippe 6 nach Überfahren mit dem Kugelkopf 3 wieder selbsttätig zurückstellt und an der zapfennahen Oberfläche 7 des Kugelkopfes 3 wieder dichtend anliegt bzw. wird die Schutzlippe 6 aus einem weicheren Material gefertigt und an der Kugelpfanne 2, wie in Figur la beispielsweise im Bereich 12 gezeigt, angebracht bzw. beispielsweise angespritzt.

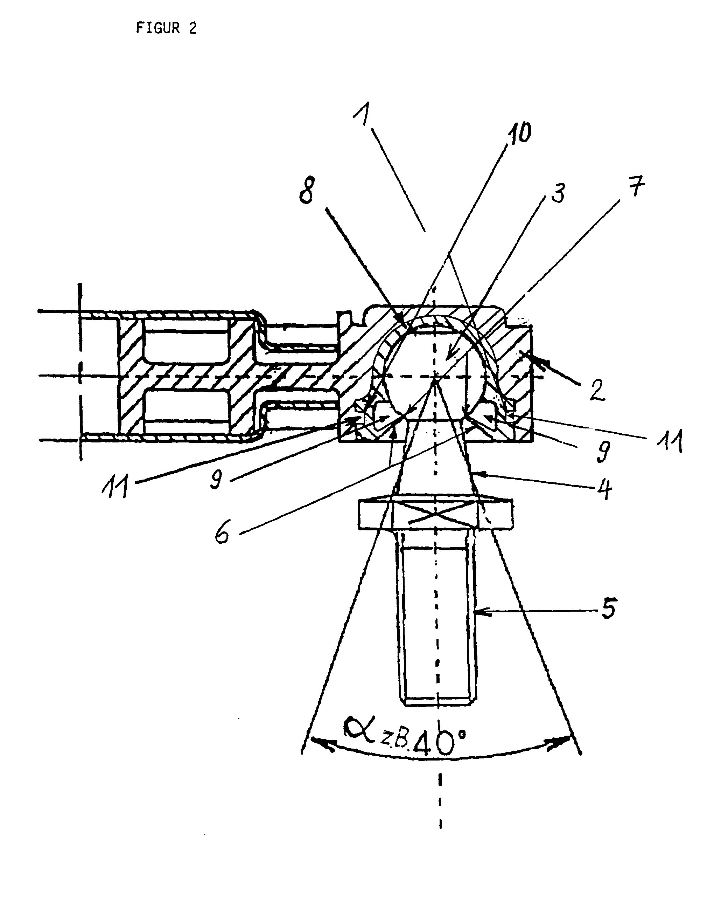

Nach Figur 2 wird in die Kugelpfanne 2, die aus einem ausreichend harten und festen Kunststoff besteht, ein kugelkalottenförmiger Einsatz 8, bestehend aus einem elastischen, ausreichend festen Kunststoff, eingesetzt. Der kugelkalottenförmige Einsatz 8 ist gegen Herausfallen oder Lösen aus der Kugelpfanne 2 dadurch gesichert, daß die Pfanne erhabene Vorsprünge (nicht dargestellt) oder einen ringörmig verlaufenden Vorsprung 11, wie dargestellt, aufweist, die in entsprechende Aussparungen 10 des kalottenförmigen Einsatzes 8 eingreifen. Auch die technische Umkehrung ist möglich, d.h. die Kugelpfanne 2 besitzt entsprechende Aussparungen, in die erhabene Vorsprünge des kalottenförmigen Einsatzes 8 eingreifen. Der kalottenförmige Einsatz 8 besitzt im kugelzapfennahen Bereich wenigstens eine angeformte ringförmige Schutzlippe 6, die an dem zapfennahen Oberflächenbereich 7 des Kugelkopfes 2 dichtend anliegt. Auch bei dieser Ausführungsform ist hinter Schutzlippe 6 ein hohler Ringraum 9, wie bereits bei Figur 1 dargelegt, vorgesehen.

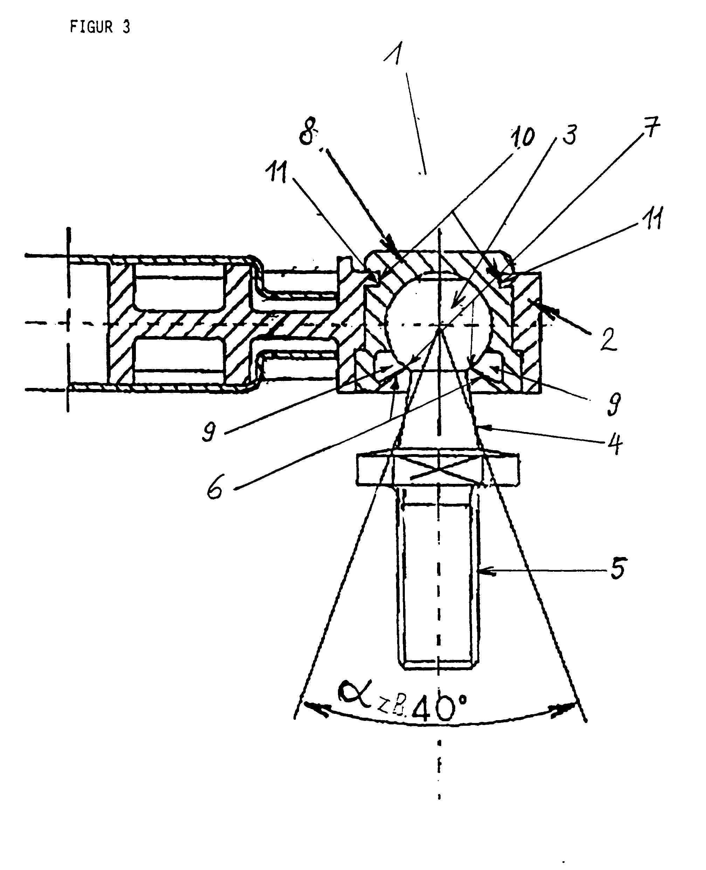

Figur 3 zeigt eine weitere Ausgestaltung der Erfindung, wobei die Kugelpfanne 2 als ein einseitig offenes (nicht dargestellt) oder beidseitig offenes Aufnahmelager, wie dargestellt, ausgebildet ist, in die ein entsprechend außenkonfigurierter kugelkalottenförmiger Einsatz 8 eingesetzt ist. Dieser kugelkalottenförmige Einsatz 8 besitzt wenigstens eine ringförmige Aussparung 10, in die wenigstens ein ringförmiger Vorsprung 11 der als Aufnahmelager dienenden Kugelpfanne 2 eingreift. Der kugelkalottenförmige Einsatz 8 besitzt wie bisher wenigstens eine kugelzapfenseitig angeordnete Schutzlippe 6, die an der zapfen- bzw. schaftnahen Oberfläche des Kugelkopfes 3 dichtend anliegt. Hinter der Schutzlippe 6 befindet sich ebenfalls ein hohler Ringraum 9, wie bereits im Zusammenhang mit den Figuren 1 und 2 erörtert.

Nach einer weiteren Ausführungsform der Erfindung können zwei und mehr dichtend anliegende, ringförmig verlaufende Schutzlippen 6 vorgesehen sein.

Die als Aufnahmelager gestaltete Kugelpfanne 2 kann im Querschnitt innenseitig kreisförmig, quadratisch, rechteckig oder polygon sein, um punkt- oder linienförmige Berührungen zu erzeugen.

## Patentansprüche

1. Kugelgelenkverbindung, bestehend aus einem kugelschaft (5) und Kugelzapfen (4) mit einer Gelenkkugel (3), der in einer Kugelpfanne (2) gelagert ist, mit mindestens einer von der Kugelpfanne (2) ausgehenden Schutzlippe (6), die an dem zapfennahen Oberflächenbereich (7) der Gelenkkugel (3) abdichtend anliegt, wobei hinter der ringförmigen Schutzlippe (6) am Oberflächenbereich der Gelenkkugel (3) ein Ringraum (9) vorgesehen ist, **dadurch gekennzeichnet, dass** der Ringraum (9) eine Größe aufweist, die ein Ausweichen der nachgiebigen Schutzlippe (6) beim Einstecken der Gelenkkugel (3) ermöglicht.

2. Kugelgelenkverbindung nach Anspruch 1, **dadurch gekennzeichnet, daß** die Kugelpfanne (2) aus einem ausreichend festen und harten Kunststoff gefertigt ist, in die ein kugelkalottenförmiger Einsatz (8) aus einem flexiblen Kunststoffmaterial eingesetzt ist, die mindestens eine daran integrierte ringförmige Schutzlippe (6) aufweist, die an dem zapfennahen Oberflächenbereich (7) der Gelenkkugel (3) dichtend anliegt.

3. Kugelgelenkverbindung nach Anspruch 2, **dadurch gekennzeichnet, daß** die Kugelpfanne (2) als ein- oder beidseitig offenes Aufnahmelager ausgebildet ist, in das der kugelkalottenförmige Einsatz (8) eingesetzt ist.

4. Gelenkverbindung nach Anspruch 3, **dadurch gekennzeichnet, daß** der kugelkalottenförmige Einsatz (8) Vertiefungen zur Aufnahme eines Schmiermittels aufweist.

5. Gelenkverbindung nach einem der vorhergehenden Ansprüche 1 bis 4, **dadurch gekennzeichnet, daß** der kugelkalottenförmige Einsatz (8) darin integrierte Schmiermittelbestandteile enthält.

6. Kugelgelenkverbindung nach Anspruch 5, **dadurch gekennzeichnet, daß** der kugelkalottenförmige Einsatz (8) gegen Herausfallen oder Lösen aus der Kugelpfanne (2) bzw. der als Aufnahmelager ausgebildeten Kugelpfanne (2) gesichert ist.

## Revendications

1. Joint à rotule constitué par une tige (5) portant une boule et un pivot conique à rotule (4) comportant une boule d'articulation (3), qui est monté dans un coussinet sphérique (2), comportant au moins une lèvre de protection (6) qui fait saillie à partir du coussinet sphérique (2) et qui s'applique d'une manière étanche contre la partie superficielle (7), qui est proche du pivot, de la boule d'articulation (3), dans lequel un espace annulaire (9) est prévu en arrière de la lèvre de protection de forme annulaire (6) sur la partie superficielle de la boule d'articulation (3), **caractérisé en ce que** l'espace annulaire (9) possède une taille qui permet un écartement de la lèvre d'étanchéité flexible (6) lors de l'enfichage de la boule d'articulation (3).

2. Joint à rotule selon la revendication 1, **caractérisé en ce que** le coussinet sphérique (2) est réalisé en une matière plastique suffisamment rigide et dure, dans laquelle est inséré un insert en forme de calotte sphérique (8) formée d'une matière plastique souple, qui possède au moins une lèvre de protection de forme annulaire (6) intégrée dans l'insert et qui s'applique d'une manière étanche contre la zone superficielle (7), proche du pivot, de la boule d'articulation (3).

3. Joint à rotule selon la revendication 2, **caractérisé en ce que** le coussinet sphérique (2) est agencé sous la forme d'un support de logement ouvert d'un côté ou des deux côtés et dans lequel est inséré l'insert (8) en forme de calotte sphérique.

4. Joint à rotule selon la revendication 3, **caractérisé en ce que** l'insert (8) en forme de calotte sphérique comporte des renfoncements pour loger un lubrifiant.

5. Joint à rotule selon l'une des revendications précédentes 1 à 4, caractérisé en ce l'insert (8) en forme de calotte sphérique contient des constituants de lubrifiant, qui sont intégrés dans cet insert.

6. Joint à rotule selon la revendication 5, **caractérisé en ce que** l'insert (8) en forme de calotte sphérique est protégé contre une chute ou un détachement à partir du coussinet sphérique (2) ou du coussinet sphérique (2) agencé en tant que support de logement.

## Claims

1. Ball-and-socket joint consisting of a ball shaft (5) and a ball pin (4), comprising a spherical part (3) supported in a ball cup (2) and at least one protective lip (6) departing from the ball cup (2) and bearing in a sealing manner against the surface region (7) of the spherical part (3) close to the pin, an annular space (9) being provided on the surface region of the spherical part (3) behind the annular protective lip (6), **characterised in that** the annular space (9) has sufficient dimensions to allow for deflection of the resilient protective lip (6) when the spherical part (3) is inserted.

2. Ball-and-socket joint according to claim 1, **characterised in that** the ball cup (2) is made of a sufficiently rigid, hard plastic, into which a spherical cap-shaped insert (8) made of a flexible plastic having at least one integral annular protective lip (6) bearing in a sealing manner against the surface region (7) of the spherical part (3) close to the pin is inserted.

3. Ball-and-socket joint according to claim 2, **characterised in that** the ball cup (2) is designed as a receiving bearing open at one or both ends into which the spherical cap-shaped insert (8) is inserted.

4. Ball-and-socket joint according to claim 3, **characterised in that** the spherical cap-shaped insert (8) has depressions for receiving a lubricant.

5. Ball-and-socket joint according to one of the preceding claims 1 to 4, **characterised in that** the spherical cap-shaped insert (8) contains integrated lubricant constituents.

6. Ball-and-socket joint according to claim 5, **characterised in that** the spherical cap-shaped insert (8) is prevented from falling out of or disengaging from the ball cup (2) or the ball cup (2) designed as a receiving bearing.
